# EUROPEAN PATENT APPLICATION

(11) **EP 1 975 764 A2**
(43) Date of publication of application: **01.10.2008**
(21) Application number: 08005036.2
(22) Date of filing: 18.03.2008
(51) Int. Cl.: G06F 3/02

(54) **Method and apparatus for key input in a portable terminal having multiple displays**

(30) Priority: 30.03.2007 KR 20070031476
(71) Applicant: Samsung Electronics Co., Ltd., Suwon-si, Gyeonggi-Do (KR)
(72) Inventor: Jang, Hwan-Gee c/o Samsung Electronics Co., Ltd., Suwon-si, Gyeonggi-do (KR); Ko, Byung-Yeol c/o Samsung Electronics Co., Ltd., Suwon-si, Gyeonggi-do (KR); Kwon, Dong-Wook c/o Samsung Electronics Co., Ltd., Suwon-si, Gyeonggi-do (KR)
(74) Representative: Lang, Johannes

(57) **Abstract**

A key input apparatus and method for a portable terminal including a plurality of display units are provided. The apparatus and method include a detachable case detachably assembled with the portable terminal, an external key input unit connected to the detachable case and a control unit performing a control operation so that key input is received through the external key input unit when it has been detected that the detachable case is connected. The apparatus and method provide a dual-sided portable terminal having greater convenience when using input keys and better protection from the environment.

## Description

### BACKGROUND OF THE INVENTION

### 1. Field of the Invention:

The present invention relates to a portable terminal. More particularly, the present invention relates to a method and an apparatus for key input in a portable terminal having multiple displays.

### 2. Description of the Related Art:

In general, the term "portable terminal" refers to a communication device that a user can carry and with which the user can perform wireless communication with another user. Portable terminals have been widely used over the years and are more recently being provided with various additional and useful functions in the digital convergence era. For example, portable terminals may now be provided with an audio on demand (AOD) service and a video on demand (VOD) service, may make a video call which includes the viewing, of an image of a partner through a screen, and may download and play games Particularly, it is now possible to use high quality content (e.g. high quality moving pictures or on-line games) by performing a High-Speed Downlink Packet Access (HSDPA) service. To better view such high quality content, the size of a display unit of a portable terminal has increased.

In order to maintain the portability and ease of use of a portable terminal, there is a limitation in its overall size. Accordingly, in order to increase the size of a display unit of a portable terminal while maintaining the overall size of the portable terminal within limits, recent designs have been developed toward removing a key input unit (e.g. i-Phone as suggested by Apple Co.) or minimizing the number of keys of a key input unit. However, when the size of a display unit is increased and the size of a key input unit is correspondingly decreased, the user feels inconvenienced. This inconvenience is caused by various reasons including a difficulty in inputting text into the portable terminal. To resolve such inconvenience, a portable terminal having two displays (a dual-display) may be provided. Such a dual-display portable terminal is a dual-sided portable terminal which includes a first surface having a large-sized display unit suitable for a multi-media environment and a key input unit with a minimal number of keys and a second surface having a smaller sized display unit suitable for a typical communication environment and an expanded key input unit including a greater number of keys. A key input unit having a touchpad unit may be disposed at the surface of the portable terminal on the side on which the large-sized display unit suitable for a multimedia environment is positioned. With this arrangement, a multi-media environment is more easily used. However, it is again inconvenient to perform a key input operation. Also, display units are disposed at both sides of such a dual-sided portable terminal so that the display units are exposed to an exterior environment and potentially damaged. Therefore, there is a need for a dual-sided portable terminal which provides greater convenience when using input keys and provides a portable terminal that is protected from the environment.

### SUMMARY OF THE INVENTION

An aspect of the present invention is to address the above-mentioned problems and/or disadvantages and to provide at least the advantages described below. Accordingly, an aspect of the present invention is to provide a dual-sided portable terminal which can improve the convenience in performing a key input operation as well as better protect the portable terminal.

In accordance with an aspect of the present invention, a key input apparatus of a portable terminal including a plurality of display units is provided. The key input apparatus includes a detachable case detachably assembled with the portable terminal, an external key input unit connected to the detachable case and a control unit for performing a control operation so that key input is received through the external key input unit when it has been detected that the detachable case is connected.

In accordance with another aspect of the present invention, a method for key input in a portable terminal including a plurality of display units is provided. The method includes connecting a detachable case with the portable terminal and receiving key input data through an external key input unit connected with the detachable case.

In accordance with yet another aspect of the present invention, a key input apparatus of a portable terminal including a plurality of display units is provided. The key input apparatus includes a detachable case detachably assembled with the portable terminal, a key input unit connected with the detachable case, a detecting unit for detecting a connection manner in which the portable terminal is connected with the detachable case and a control unit for performing a control operation so that key input is received through a key input unit according to the detected connection manner.

In accordance with still another aspect of the present invention, a key input apparatus of a portable terminal including a plurality of display units is provided. The key input apparatus includes a detachable case detachably assembled with the portable terminal, an external key input unit connected with the detachable case, a detecting unit for detecting that the portable terminal is proximate a detecting means positioned at one surface of the detachable case and a control unit for performing a control operation so that key input data is received through the external key input unit when it has been detected that the portable terminal is proximate the detachable case.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 is a block diagram illustrating a portable terminal according to an exemplary embodiment of the present invention;
FIGs. 2A and 2B are front and rear views illustrating a portable terminal according to an exemplary embodiment of the present invention;
FIG. 3 is a perspective view of a detachable case and an external key input unit according to an exemplary embodiment of the present invention;
FIG. 4 is a perspective view illustrating a connection between a portable terminal and a detachable case according to an exemplary embodiment of the present invention;
FIG. 5 is a perspective view illustrating a connection between a portable terminal and a detachable case according to an exemplary embodiment of the present invention;
FIG. 6 is a flow chart illustrating an operation of a portable terminal, in which an external key input unit is assembled with a detachable case, according to an exemplary embodiment of the present invention;
FIGs. 7A and 7B are front and rear views illustrating a portable terminal including a detecting unit according to an exemplary embodiment of the present invention;
FIG. 8 is a perspective view illustrating a detachable case including a detecting means according to an exemplary embodiment of the present invention;
FIG. 9 is a perspective view illustrating a connection between a portable terminal including a detecting unit and a detachable case including a detecting means according to an exemplary embodiment of the present invention;
FIG. 10 is a perspective view illustrating a connection between a portable terminal including a detecting unit and a detachable case including a detecting means according to an exemplary embodiment of the present invention;
FIG. 11 is a flow chart illustrating an operation of a portable terminal depending on a connection between a portable terminal and a detachable case according to an exemplary embodiment of the present invention;
FIG. 12 is a view illustrating movement of a portable terminal assembled with a detachable case according to an exemplary embodiment of the present invention; and
FIG. 13 is a flow chart illustrating an operation of a portable terminal depending on movement of the portable terminal assembled with a detachable case according to an exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

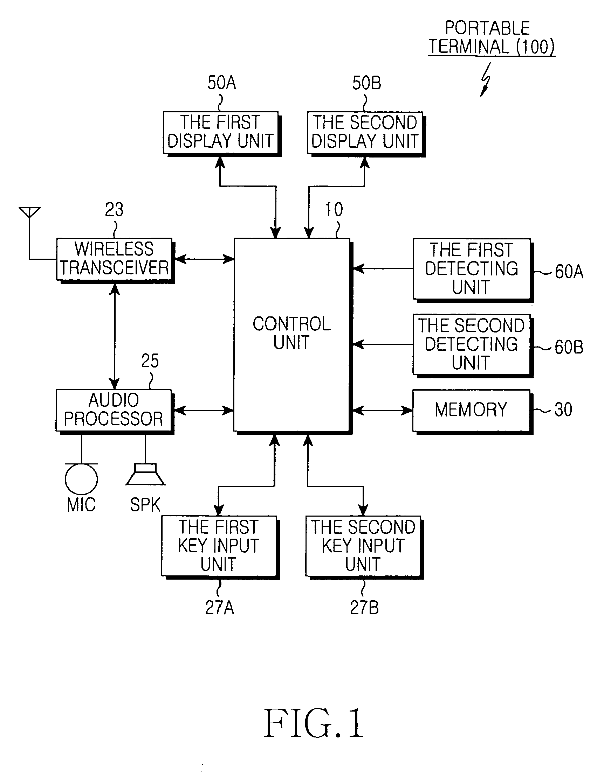

FIG. 1 is a block diagram illustrating a portable terminal 100 according to an exemplary embodiment of the present invention.

Referring to FIG. 1, a wireless transceiver 23 includes an RF unit and a modem. The RF unit includes an RF transmitter for amplification of transmitted signals and upward conversion of their frequency, as well as an RF receiver for low-noise amplification of received signals and down conversion of their frequency. The modem has a transmitter for encoding and modulating signals to be transmitted and a receiver for decoding and demodulating received signal from the RF unit.

An audio processor 25 may include a codec, specifically a data codec and an audio codec. The data codec processes data signals such as packet data, etc., and the audio codec processes audio signals, such as voice signals, multimedia fields, etc. Also, the audio processor 25 converts digital audio signals, which are received from a modem, into analog signals through the audio codec and regenerates them. In addition, the audio processor 25 converts analog audio signals, which are generated and transmitted by a microphone, into digital audio signals through the audio codec and transmits them to the modem. The audio processor 25 may be a separate component as illustrated or may be integrated with a control unit 10.

A first key input unit 27A and a second key input unit 27B include a plurality of keys such as numeric keys, keys for inputting numeric and character information, various function keys for setting various functions, and the like. The first key input unit 27A corresponds to a first display unit 50A which will be described below, and the second key input unit 27B corresponds to a second display unit 50B which will also be described below. In an exemplary implementation, the first key input unit 27A and the second key input unit 27B include a touch sensor so as to receive input data through a user's touch. The first key input unit 27A and the second key input unit 27B may further include a hold key (not shown) which prevents undesired key input when the hold key is turned on, and allows typical key input when it is turned off. Also, at least one of the first key input unit 27A and the second key input unit 27B may include a screen conversion key which performs conversion to a desired screen from among the first display unit 50A and the second display unit 50B.

A memory 30 may include a program memory and a data memory. The program memory stores a program for controlling an overall operation of a portable terminal. The data memory stores data generated during operation of the portable terminal 100 and its various functions. The data memory may store data only temporarily during transitory operation of the portable terminal (e.g. DRAM) and may store data permanently until altered by a user (e.g. Flash).

The first display unit 50A and the second display unit 50B may include a liquid crystal display (LCD), an organic light emitting diode (OLED), etc., and display various information output from the controller 10. In an exemplary implementation, the first display unit 50A and the second display unit 50B may include a touch screen so as to function as an input unit for controlling a portable terminal together with the first key input unit 27A and the second key input unit 27B.

When portable terminal 100 is connected with a detachable case, a first detecting unit 60A and/or a second detecting unit 60B may generate a sensing signal according to the connection. The sensing signal is generated in the first detecting unit 60A or the second detecting unit 60B according to the manner of connection between the terminal 100 and the detachable case. In an exemplary implementation, the first detecting unit 60A and the second detecting unit 60B include a hall sensor and can detect if a detecting means (e.g. a magnet) included in the detachable case is in proximity. Herein, if the first detecting unit 60A and the second detecting unit 60B include an apparatus other than a hall sensor, the detecting means included in the detachable case may include a device other than a magnet, as appropriate.

The control unit 10 controls overall operation of the portable terminal 100. The control unit 10 performs a control operation so that key input data is received through an external key input unit when it has been detected that the portable terminal is connected with a detachable case and that the external key input unit is connected with the detachable case. In an exemplary implementation as will be explained in more detail below, the control unit 10 may determine that the detachable case is connected with the portable terminal when a connection node of the portable terminal 100 is connected with a connection node of the detachable case. This determination can be made, for example, by performing a function of current feedback (CF). Also, under the control of the control unit 10, the manner in which the external key input unit is connected may be detected through the first detecting unit 60A and the second detecting unit 60B. According to the manner in which the detachable case is connected, key input data is received through a key input unit of the portable terminal or the external key input unit connected with the detachable case.

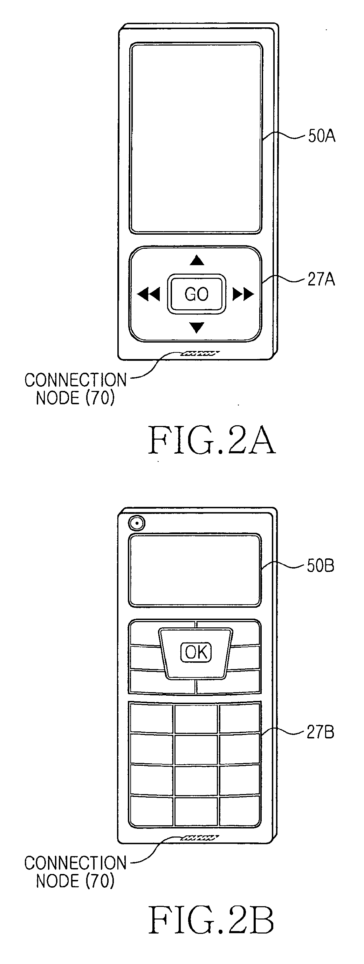

FIGs. 2A to 2B are front and rear views illustrating a portable terminal according to an exemplary embodiment of the present invention. With reference to FIGs. 2A and 2B, a portable terminal according to an exemplary embodiment of the present invention will be described below.

FIG. 2A illustrates a front surface of a portable terminal according to an exemplary embodiment of the present invention. The front surface of the portable terminal includes the first display unit 50A and the first key input unit 27A. The first display unit 50A provides a large sized screen suitable for a multimedia environment, and the first key input unit 27A allows a key input (e.g. a touchpad input) suitable for a multi-media environment. That is, by limiting the number of keys to those most commonly used in a multimedia environment, the key input unit 27A may have a smaller size and thus allow more room for the larger display 50A. FIG. 2B illustrates a rear surface of a portable terminal according to an exemplary embodiment of the present invention. The rear surface of the portable terminal includes the second display unit 50B and the second key input unit 27B. The second key input unit 27B includes a plurality of keys allowing a user to conveniently perform a key input operation, and the second display unit 50B has a smaller sized screen in comparison with the first display unit 50A due to a space-limitation caused by the second key input unit 27B. The second display unit 50B can be regarded as a typical display unit of a conventional portable terminal. As further illustrated in FIGs. 2A and 2B, a portable terminal according to an exemplary embodiment of the present invention is also provided with a connection node 70 for connection with a detachable case as will be explained in detail below.

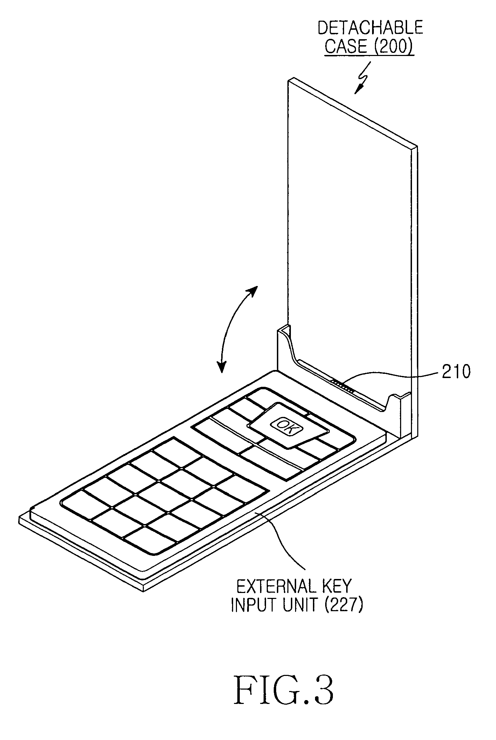

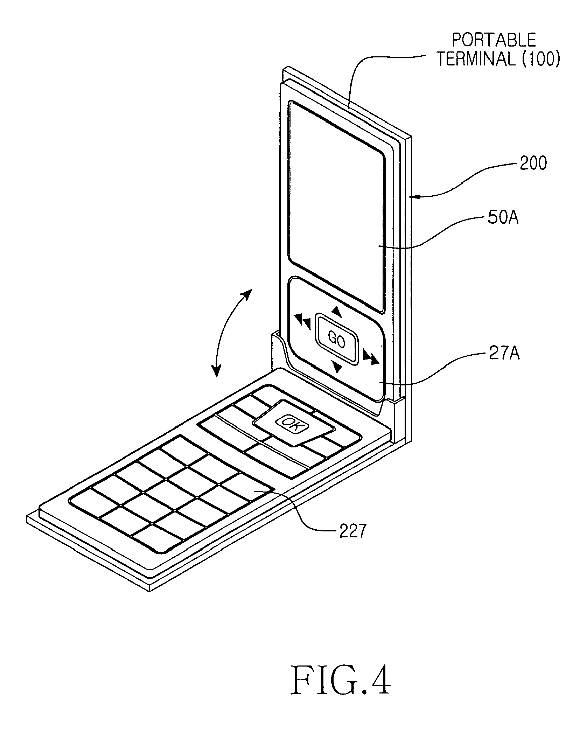

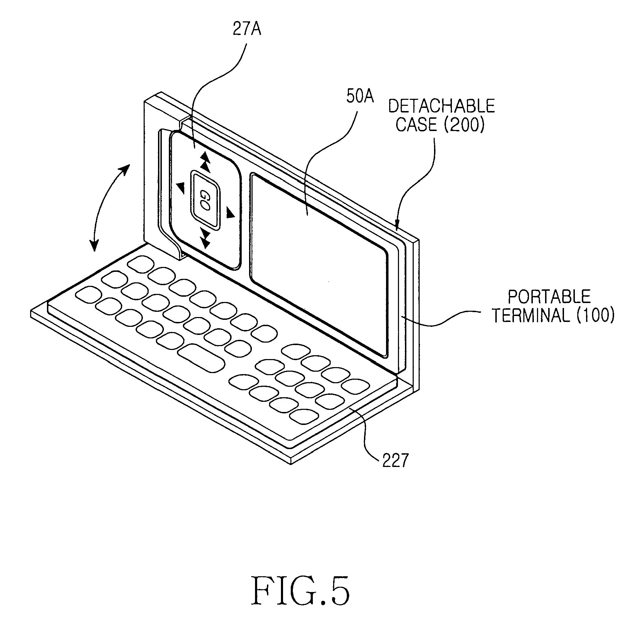

FIG. 3 is a view illustrating a detachable case and an external key input unit according to an exemplary embodiment of the present invention, FIG. 4 is a perspective view illustrating a connection between a portable terminal and a detachable case according to an exemplary embodiment of the present invention, and FIG. 5 is a perspective view illustrating another connection between a portable terminal and a detachable case according to an exemplary embodiment of the present invention.

With reference to an exemplary implementation illustrated in FIG. 3, a detachable case 200 includes a flip-type case which can protect both surfaces of the portable terminal 100 with which the detachable case 200 is assembled. The detachable case 200 may include an external key input unit 227. The external key input unit 227 may be a fixed-type key input unit fixedly assembled with the detachable case 200, and also may be a detachable key input unit which can be detachably assembled with the detachable case 200. The detachable case 200 includes a connection node 210 for electrical connection with a connection node 70 of the portable terminal. Through a connection made between connection node 210 of the detachable case 200 and connection node 70 of the portable terminal 100, a key input signal, which is received from the external key input unit 227, can be transmitted to the portable terminal 100. Data processed between connection nodes 210 and 70 may also be data in addition to the key input signal of the external key input unit 227. Also, the detachable case 200 may include a detecting means that is used for detecting the manner in which the detachable case is connected to the portable terminal 100. The detecting means and its function will be described in more detail below.

Exemplary embodiments of a portable terminal 100 assembled with a detachable case 200 are illustrated in FIG.4 and FIG. 5. The example of FIG. 4 illustrates an external key input unit 227, connected to (or included in) the detachable case 200, which is configured similar to a conventional key input unit of a portable terminal. The example of FIG. 5 illustrates an external key input unit 227 that includes a QWERTY keyboard which may be more convenient for inputting characters. As further illustrated in FIG. 5, the portable terminal is configured having a horizontal displacement with respect to the key input so as to more efficiently utilize a display unit (i.e. the display unit 50A) from among a plurality of display units of the portable terminal 100. That is, the portable terminal 100 is assembled with the detachable case 200 so that ease of use, for example the performing of a key input operation, searching the Internet, watching text or moving pictures, etc., while viewing the wide display unit (i.e. the display unit 50A) is increased.

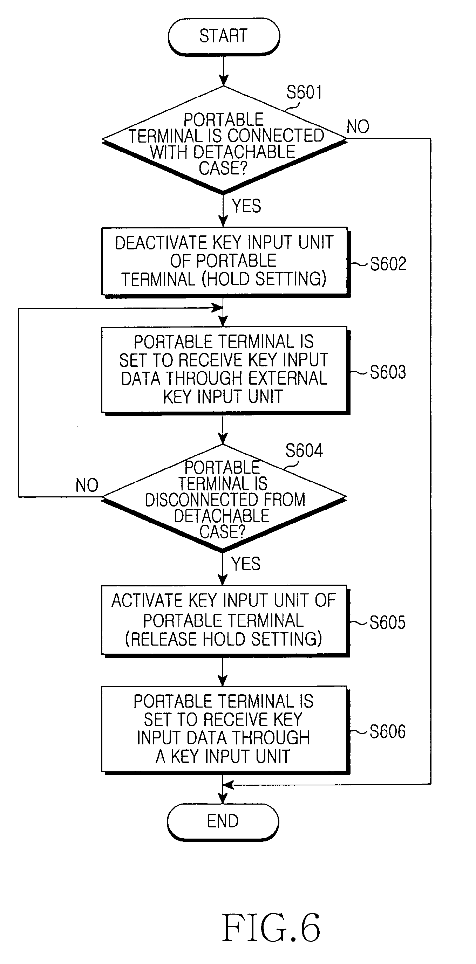

FIG. 6 is a flow chart illustrating an operation of a portable terminal, in which an external key input unit is connected with a detachable case, according to an exemplary embodiment of the present invention.

With reference to FIG. 6, a control unit determines if the detachable case is connected to the portable terminal in step S601. If it is determined that the detachable case is not connected to the portable terminal, the process is terminated. Alternatively, if it is determined that the detachable case is connected to the portable terminal, the control unit performs a control operation so that a key input unit of the portable terminal is deactivated in step S602. The control unit also performs a setting operation so that key input data is received through an external key input unit connected with the detachable case in step S603.

In an exemplary implementation, it is assumed that the detachable case 200 is connected with the external key input unit 227. Therefore, when the portable terminal 100 is connected with the detachable case 200 as shown in FIG. 4 or FIG. 5, the connection of the external key input unit 227 to the detachable case is detected, and a key input unit of the portable terminal 100 (e.g. the first key input unit 27A or the second key input unit 27B which is shown in FIGs. 2A and 2B) is deactivated (e.g. is set to hold). Through this process, the control unit 10 prevents a key input operation from being performed through the first key input unit 27A or the second key input unit 27B while a key input operation is performed through the external key input unit 227. Then, the control unit performs a control operation so that key input data is received through the external key input unit 227, and an operation corresponding to the user's key input is performed. Also, under the control of the control unit, the first key input unit 27A or the second key input unit 27B, which has been deactivated due to connection of the external key input unit 227, can also be re-activated.

In step S604, it is determined if the detachable case is disconnected from the portable terminal. If it is determined that the detachable case is disconnected from the portable terminal, the key input unit of the portable terminal (e.g. the first key input unit 27A or the second key input unit 27B) is re-activated in step S605. That is, the hold setting of the key input unit of the portable terminal is released. If it is determined that the detachable case remains connected to the portable terminal, the control unit returns to step S603 and the portable terminal remains set to receive key input through the external key input unit 227.

Again, when it has been determined that the detachable case 200 is disconnected from the portable terminal, the key input unit (e.g. the key input unit 27A or 27B) is controlled to be re-activated. Accordingly, the user can control the portable terminal without the external key input unit 227. The control unit 10 performs a setting operation so that key input data is received through the key input unit (e.g. the first key input unit 27A or the second key input unit 27B) of the portable terminal in step S606. Then, key input data is received through the key input unit which has been re-activated (e.g. the key input unit 27A or 27B), and an operation corresponding to the key input data is performed.

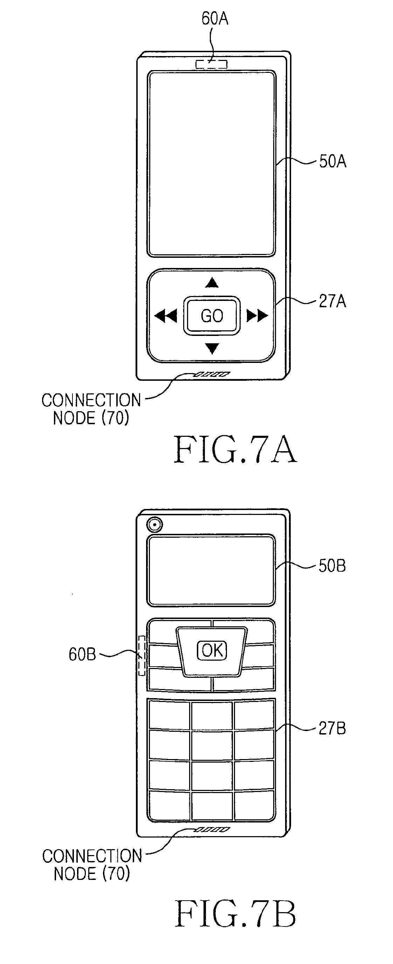

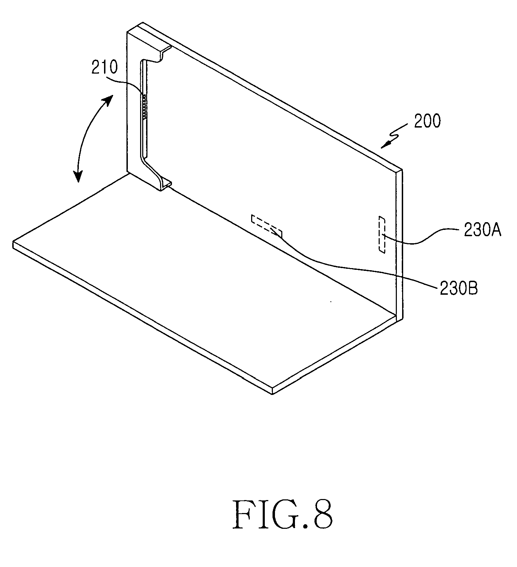

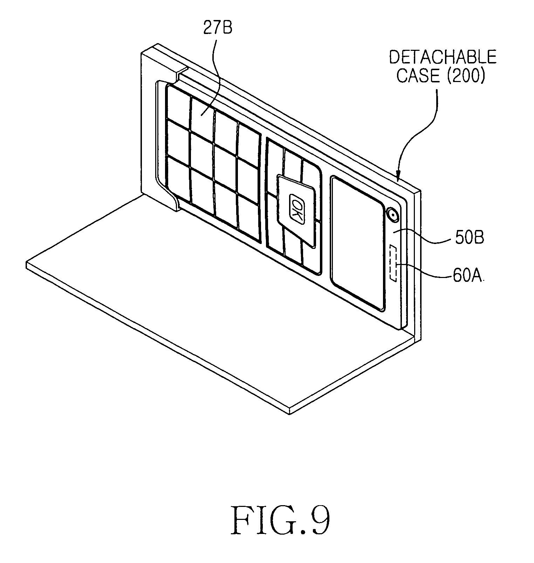

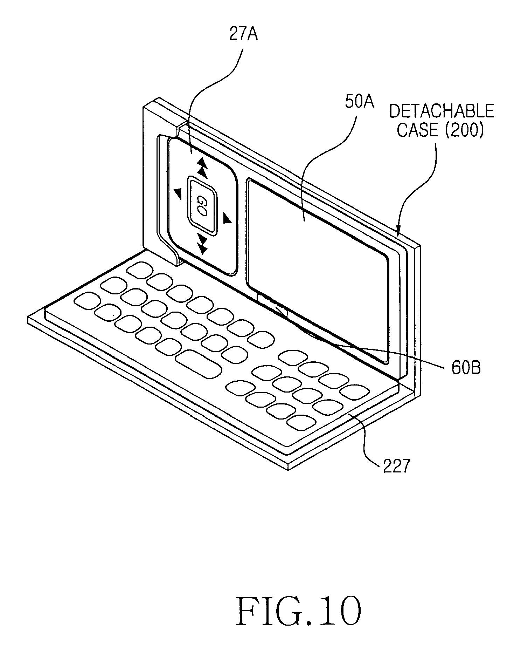

FIGs. 7A and 7B are front and rear views illustrating a portable terminal including a detecting unit according to an exemplary embodiment of the present invention and FIG. 8 is a perspective view of a detachable case including a detecting means according to an exemplary embodiment of the present invention. FIG. 9 is a perspective view illustrating a connection between a portable terminal including a detecting unit and a detachable case including a detecting means according to an exemplary embodiment of the present invention and FIG. 10 is a perspective view illustrating another connection between a portable terminal including a detecting unit and a detachable case including a detecting means according to an exemplary embodiment of the present invention.

FIGs. 7A and 7B illustrate a portable terminal 100 further including the first detecting unit 60A and/or the second detecting unit 60B in comparison with the portable terminal 100 as illustrated in FIGs. 2A and 2B. Particularly, FIG. 7A illustrates a portable terminal further including the first detecting unit 60A in comparison with the portable terminal as illustrated in FIG. 2A, and FIG. 7B illustrates a portable terminal further including the second detecting unit 60B in comparison with the portable terminal as illustrated in FIG. 2B. FIG. 8 illustrates a detachable case 200 further including a detecting means 230A and 230B positioned at locations corresponding to the detecting units (the first detecting unit 60A and the second detecting unit 60B) of the portable terminal as shown in FIGs. 7A and 7B. In an exemplary implementation, the control unit 10 can determine the manner in which the portable terminal 100 is connected with the detachable case 200 through the detecting units and detecting means of the portable terminal 100 and the detachable case 200 as illustrated in FIGs. 7A, 7B and 8. According to the connection manner as determined by the detecting units and the detecting means, the control unit 10 can perform a control operation so that key input data is received through the key input unit 27A or 27B of the portable terminal 100 or the external key input unit 227.

FIG. 9 illustrates the portable terminal 100 and the detachable case 200, which are assembled in such a manner to allow use of the second display unit 50B. When the portable terminal is assembled with the detachable case as illustrated in FIG. 9, the first detecting unit 60A, positioned on the same surface on which the first display unit 50A is positioned, is proximate the detecting means 230 of the detachable case 200, and generates a sensing signal according to its proximity. Using this sensing signal, the control unit 10 detects that the portable terminal is connected with the detachable case in the same manner as illustrated in FIG. 9, and can perform a control operation so that key input data is received through the key input unit of the portable terminal (e.g. the key input unit 27B).

The exemplary implementation of FIG. 10 illustrates the portable terminal 100 connected with the detachable case 200 in such a manner to allow use of the first display unit 50A. When the portable terminal is connected as shown in FIG. 10, the second detecting unit 60B, positioned on the same surface on which the second display unit 50B is positioned, is proximate the detecting means 230B of the detachable case 200, and generates a sensing signal according to its proximity. Using this sensing signal, the control unit 10 detects that the portable terminal is connected with the detachable case is the manner as illustrated in FIG. 10, and can perform a control operation so that key input data is received through the external key input unit 227. Considering that the first display unit 50A is a larger sized display unit in comparison with the second display unit 50B, it is preferable that the external key input unit 227 is a QWERTY keyboard as illustrated in FIG. 10. However, the external key input unit 227 according to an exemplary embodiment of the present invention may also be another type of key input unit as shown in FIG. 3 other than a QWERTY keyboard.

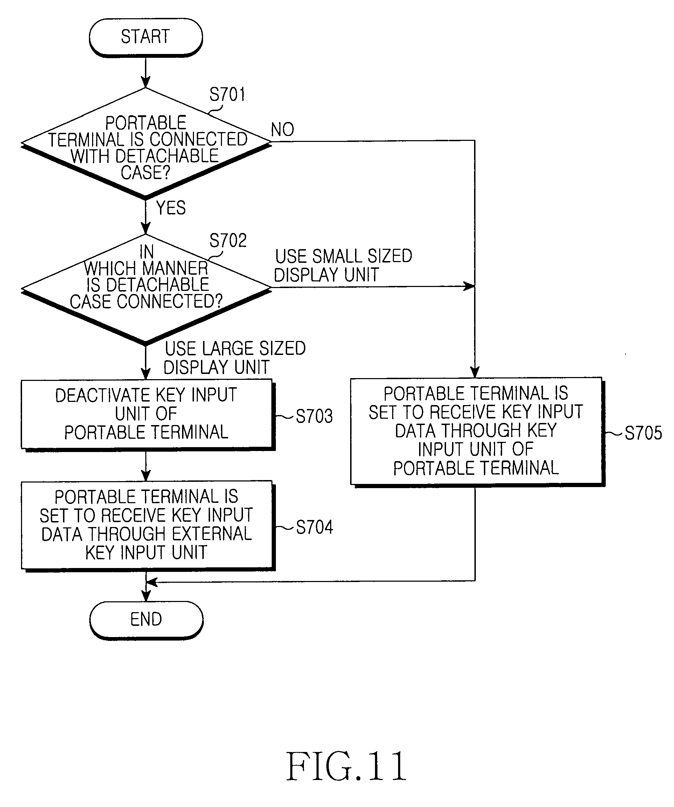

FIG. 11 is a flow chart illustrating an operation of a portable terminal depending on the manner in which it is connected to a detachable case according to an exemplary embodiment of the present invention.

When it is determined that the detachable case is connected with the portable terminal in step S701, the control unit 10 determines the manner in which the portable terminal is connected with the detachable case in step S702.

That is, when the portable terminal 100 is assembled with the detachable case 200 as shown in FIG. 9 or FIG. 10, the control unit 10 determines the manner in which the portable terminal is connected with the detachable case through the first detecting unit 60A or the second detecting unit 60B.

When it has been determined that the manner of connection allows use of the large sized display unit, the key input unit of the portable terminal is deactivated in step S703, and the portable terminal is set to receive key input data from the external key input unit in step S704.

As illustrated in FIG. 10, the portable terminal is connected with the detachable case in such a manner to allow use of a larger sized display unit (e.g. the first display unit 50A), and the second detecting unit 60B generates a sensing signal indicating its proximity to the detecting means 230B. Through the second detecting unit 60B, the control unit 10 can determine if the portable terminal is connected with the detachable case in the connection manner as shown in FIG. 10, and performs a control operation so that key input data is received through the external key input unit 227. Under the control of the control unit 10, the first key input unit 27A of the portable terminal can be deactivated. Alternatively, the first key input unit 27A can be activated according to the user's choice.

If it has been determined in step S702 that the portable terminal is connected with the detachable case in such a manner to allow use of a small sized display unit, the control unit 10 performs a control operation so that key input data is received through the key input unit of the portable terminal in step S705.

As illustrated in FIG. 9, when the portable terminal is connected with the detachable case in such a manner to allow use of a smaller sized display unit (e.g. the second display unit 50B), the first detecting unit 60A generates a sensing signal indicating its proximity to the detecting means 230A. Through the first detecting unit 60A, the control unit 10 can determine if the portable terminal is connected with the detachable case in the connection manner as illustrated in FIG. 9, and performs a control operation so that key input data is received through the external key input unit 227. Although the external key input unit 227 is not included in the portable terminal in FIG. 9, in a case where the external key input unit 227 is included in (connected with) the detachable case 200, the control unit 10 performs a control operation so that the external key input unit 227 is deactivated. Accordingly, the user can prevent erroneous key input caused by the external key input unit 227 when the user performs key operation through the key input unit 27B of the portable terminal.

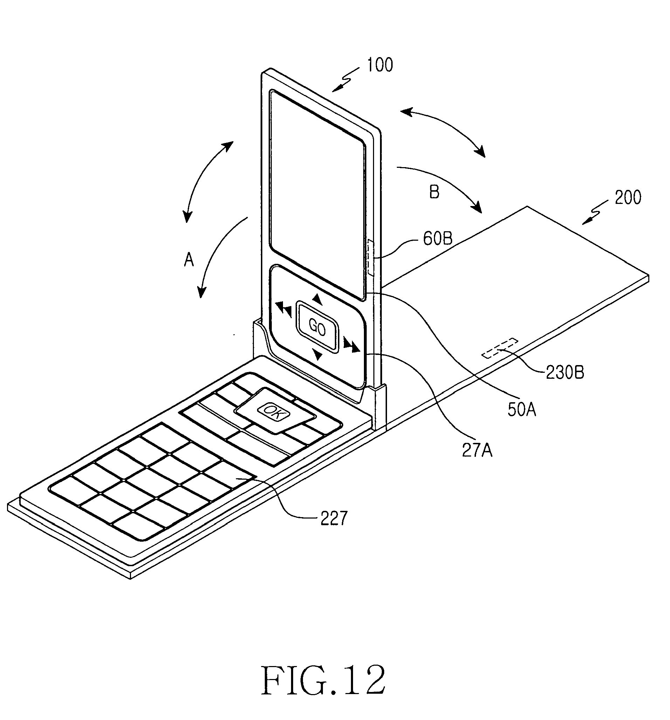

FIG. 12 is a view illustrating a movement of a portable terminal connected with a detachable case according to an exemplary embodiment of the present invention.

With reference to FIG. 12, a portable terminal 100 according to an exemplary embodiment of the present invention is connected with a detachable case 200 and can be moved in a state in which the detachable case 200 remains connected therewith. That is, the portable terminal 100 can approach the detachable case 200 in the direction A or in the direction B so as to be used. When the portable terminal 100 approaches the detachable case in the direction A, the user can operate the second display unit 50B and the second key input unit 27B. When the portable terminal 100 approaches the detachable case in the direction B, the user can operate the first display unit 50A and the first key input unit 27A. As mentioned above, when the first display unit 50A and the first key input unit 27A are used, key input operation may be inconvenient due to the smaller size of the key input unit 27A. Therefore, the portable terminal 100 and the detachable case 200 detect that the portable terminal 100 approaches the detachable case in the direction B through detecting means 230B positioned at a location corresponding to the second display unit 50B. Accordingly, when the user moves the portable terminal 100 in the direction B so as to use the first display unit 50A having a large sized display screen in comparison with the second display unit 50B, the user can conveniently perform key input operation through the external key input unit 227.

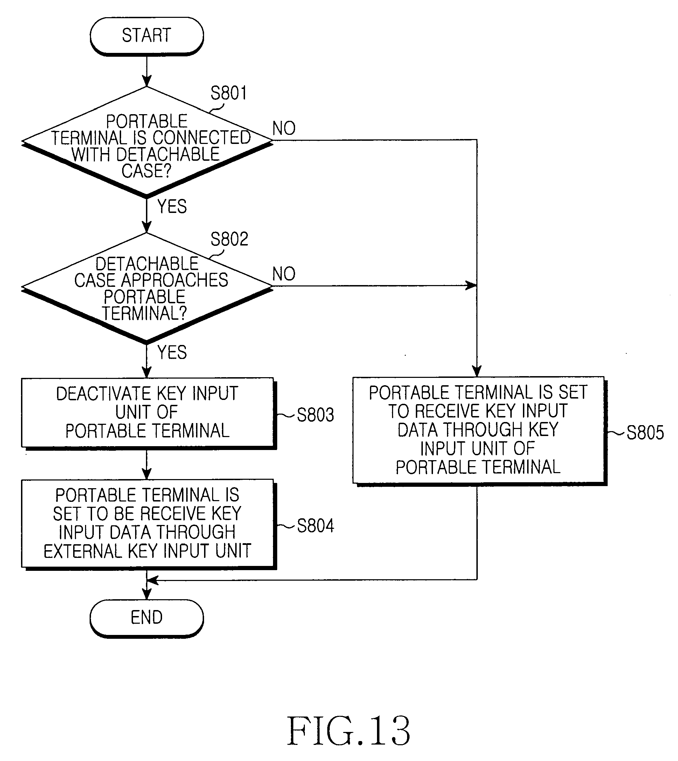

FIG. 13 is a flow chart illustrating an operation of a portable terminal according to a movement of the portable terminal connected with the detachable case according to an exemplary embodiment of the present invention. The operation will be described with reference to FIGs. 4, 12, and 13.

When it is determined that the detachable case is connected to the portable terminal in step S801, the control unit 10 determines if the portable terminal approaches the detachable case in step S802. As described with reference to FIG. 12, the control unit 10 receives a sensing signal detected by the detecting means 230B from the second detecting unit 60B positioned at a surface opposite to a surface at which the first display unit 50A is positioned (i.e. a surface at which the second display unit is positioned) so that the control unit 10 determines that the portable terminal 100 approaches the detachable case 200 in the direction B. At this time, although the portable terminal 100 can approach the detachable case in the direction A as shown in FIG. 12, it is assumed that there is no approach of the portable terminal even if the portable terminal 100 approaches the detachable case in the direction A because a detecting unit (e.g. a hall sensor) and a detecting means (e.g. a magnet) are not included therein.

When it has been detected that the portable terminal approaches the detachable case, under the control of the control unit 10, the key input unit of the portable terminal 100 is deactivated in step S803, and key input data is received through the external key input unit in step S804.

When the portable terminal 100 approaches the detachable case in the direction B, the portable terminal is assembled with the detachable case as shown in FIG. 4. Therefore, the control unit 10 performs a control operation so that a key input unit (at least one of the key input units 27A and 27B) is deactivated, thereby preventing erroneous key input. After this, under the control of the control unit 10, the external key input unit 227 is set to allow a key input operation to be performed so that the user performs a key input operation through the external key input unit 227. At this time, it is assumed that the first display unit 50A is activated (or a screen is converted from the second display unit 50B to the first display unit 50A) so that various pieces of display information including results obtained by key input operation are output through the first display unit.

When it has been determined that the portable terminal does not approach the detachable case in step S802, the key input unit of the portable terminal is set to receive key input data under the control of the control unit 10 in step S805.

If the detachable case 200 is not connected with the portable terminal 100, or the portable terminal 100 and the detachable case 200 do not approach each other (the second detecting unit 60B and the detecting means 230B do not approach each other), key input operation is performed through a key input unit of the portable terminal (at least one of the key input units 27A or 27B) under a control of the control unit. At this time, it is assumed that various pieces of display information including a result obtained by key input operation are outputted through the second display unit 50B.

As described above, in a dual-sided portable terminal including a surface having a large sized display unit suitable for a multimedia environment and a surface having a small sized display unit suitable for mobile communication, exemplary embodiments of the present invention provide an external key input unit so that the user can easily perform a key input operation through a desired surface of both surfaces of the portable terminal.

Also, there is an advantage in that a desired key input unit of an embedded key input unit and an external key input unit is automatically selected only by selecting a way of connection between a detachable case and the portable terminal.

Also, exemplary embodiments of the prevent invention provide a function for easily performing a key input operation and also protect each display unit of the dual-sided portable terminal.

While the present invention has been shown and described with reference to certain exemplary embodiments thereof, it will be understood by those skilled in the art that various changes in form and details may be made therein without departing from the scope and spirit of the invention as disclosed in the accompanying claims and their equivalents.

## Claims

1. A key input apparatus of a portable terminal including a plurality of display units, comprising:
a detachable case detachably assembled with the portable terminal;
an external key input unit connected to the detachable case; and
a control unit for performing a control operation so that key input is received through the external key input unit when it is detected that the detachable case is connected.

2. The key input apparatus as claimed in claim 1, wherein the control unit performs a control operation so that a key input unit of the portable terminal is deactivated when key input has been received through the external key input unit.

3. The key input apparatus as claimed in claim 1, wherein the control unit performs a control operation so that a key input unit of the portable terminal is deactivated when the detachable case is connected.

4. The key input apparatus as claimed in claim 1, wherein the control unit performs a control operation so that a result obtained from key input received through the external key input unit is output through one of the plurality of display units.

5. The key input apparatus as claimed in claim 4, wherein the one of the plurality of display units comprises a display unit having a larger sized display screen from among the plurality of display units.

6. The key input apparatus as claimed in claim 1, wherein the external key input unit can be detachably assembled with the detachable case.

7. A method for key input in a portable terminal including a plurality of display units, the method comprising:
connecting a detachable case with the portable terminal; and
receiving key input through an external key input unit connected with the detachable case.

8. The method for key input as claimed in claim 7, further comprising deactivating a key input unit of the portable terminal when the key input has been received through the external key input unit.

9. The method for key input as claimed in claim 7, further comprising deactivating a key input unit of the portable terminal when the detachable case has been connected.

10. The method for key input as claimed in claim 7, further comprising outputting a result obtained from the key input received through the external key input unit through one of the plurality of display units.

11. The method for key input as claimed in claim 7, wherein the one of the plurality of display units comprises a display unit having a larger sized display screen from among the plurality of display units.

12. The method for key input as claimed in claim 7, wherein the external key input unit can be detachably assembled with the detachable case.

13. A key input apparatus of a portable terminal including a plurality of display units, comprising:
a detachable case detachably assembled with the portable terminal;
an external key input unit connected with the detachable case;
a detecting unit for detecting a manner in which the portable terminal is connected with the detachable case; and
a control unit for performing a control operation so that key input is received according to the detected connection manner.

14. The key input apparatus as claimed in claim 13, wherein the control unit performs a control operation so that the key input is received through the external key input unit when the detected connection manner comprises a manner allowing use of a display unit having a larger sized screen from among the plurality of display units.

15. The key input apparatus as claimed in claim 14, wherein the control unit performs a control operation so that a key input unit of the portable terminal is deactivated when the detected connection manner comprises the manner allowing use of a display unit having a larger sized screen from among the plurality of display units.

16. The key input apparatus as claimed in claim 13, wherein the control unit performs a control operation so that the key input is received through a key input unit of the portable terminal when the detected connection manner comprises a manner allowing use of a display unit having a smaller sized screen from among the plurality of display units.

17. The key input apparatus as claimed in claim 16, wherein the control unit performs a control operation so that the external key input unit is deactivated when the detected connection manner comprises a manner allowing use of a display unit having a smaller sized screen from among the plurality of display units.

18. The key input apparatus as claimed in claim 13, wherein the external key input unit can be detachably assembled with the detachable case.

19. A key input apparatus of a portable terminal including a plurality of display units, comprising:
a detachable case detachably assembled with the portable terminal;
an external key input unit connected with the detachable case;
a detecting unit for detecting that the portable terminal is in proximity to a detecting means positioned at one surface of the detachable case; and
a control unit for performing a control operation so that key input is received through the external key input unit when it has been detected that the portable terminal is proximate the detachable case.

20. The key input apparatus as claimed in claim 19, wherein the control unit performs a control operation so that a key input unit of the portable terminal is deactivated when it has been detected that the portable terminal is proximate the detachable case.

21. The key input apparatus as claimed in claim 19, wherein the control unit performs a control operation so that the key input is received through a key input unit of the portable terminal when it has been detected that the portable terminal is not proximate the detachable case.

22. The key input apparatus as claimed in claim 19, wherein the control unit performs a control operation so that the external key input unit is deactivated when it has been detected that the portable terminal is not proximate the detachable case.

23. The key input apparatus as claimed in claim 19, wherein the external key input unit can be detachably assembled with the detachable case.
